Europäisches Patentamt

European Patent Office

Office européen des brevets

(19)

(11) Publication number: **0 207 295**
**A1**

## (12) EUROPEAN PATENT APPLICATION

(21) Application number: 86107322.9

(22) Date of filing: 30.05.86

(51) Int. Cl.⁴: **G 05 D 23/275**
**G 05 D 3/18**

(30) Priority: 03.06.85 US 740656

(43) Date of publication of application:
07.01.87 Bulletin 87/2

(84) Designated Contracting States:
BE CH DE FR GB IT LI NL SE

(71) Applicant: HONEYWELL INC.
Honeywell Plaza
Minneapolis Minnesota 55408(US)

(72) Inventor: Kompelien, Arlon D.
6329 Thomas Avenue
South Richfield Minnesota 55423(US)

(72) Inventor: Nelson, Marvin D.
2480 South Highway 100
St. Louis Parl Minnesota 55416(US)

(74) Representative: Herzbach, Dieter et al,
Honeywell Europe S.A. Holding KG Patent- und
Lizenzabteilung Kaiserleistrasse 55 Postfach 184
D-6050 Offenbach am Main(DE)

(54) Thermostat.

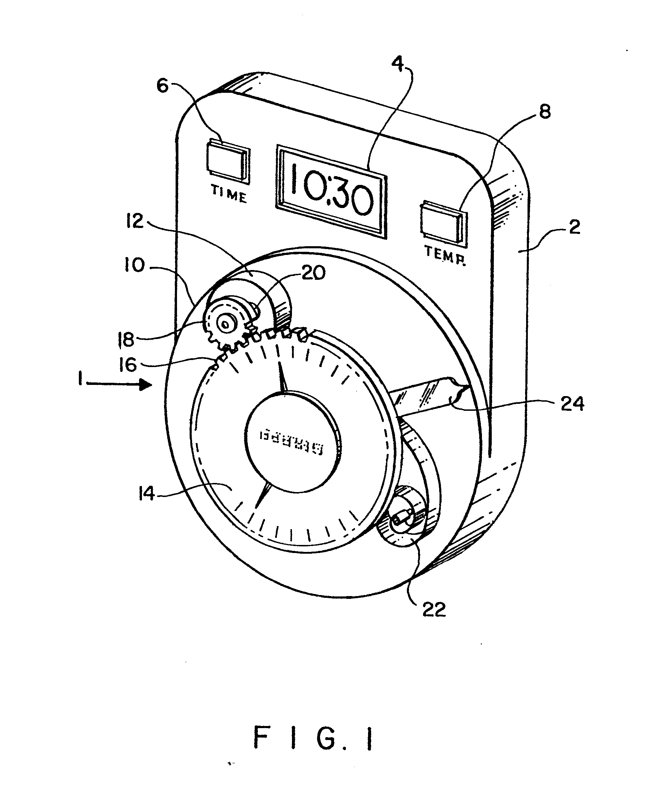

(57) A combined analog and digital control for a thermostat setpoint includes a manual thermostat control knob (14) arranged to be driven by an output shaft of a bidirectional stepping motor (12) with the control knob being coupled to the setpoint control of the thermostat. The non-energised detent torque of the stepping motor holds the setpoint position while digital pulses may be selectively applied to the motor to change the setpoint coresponding to the amount of temperature change desired. The manual adjusting knob is concurrently available for an operator to also change the setpoint while the non-energised detent torque of the motor provides a mechanical feedback for holding the setpoint and signaling adjustment increments during the manual adjustment (Figure 1).

FIG.1

Croydon Printing Company Ltd.

HONEYWELL INC.
Honeywell Plaza
Minneapolis, MN 55440 USA

May 28, 1986
R1110864 EP
Hz/de

Thermostat

The present invention relates to a thermostat according to the preamble of claim 1. More specifically, the present invention is directed to a thermostat having a combined analog and digital adjustment capability.

Thermostats having a manual adjustment of the temperature setpoint of the thermostat are well-known. However, such a conventional thermostat does not provide a capability for an automatic adjustment of the setpoint particularly in a so-called temperature setback or night temperature mode of operation. While conventional thermostats having a clock or timer mechanism for adjusting the setpoint are also well-known, they are not capable of being automatically adjusted from a central location particularly in a large building installation having many thermostats controlling individual areas. Such a system may also be monitored by a central or remote digital computer operating according to a stored program and capable of providing digital pulses for controlling digitally responsive devices. Accordingly, it would be desirable to provide a thermostat having a joint capability for enabling a manual adjustment of the setpoint temperature thereof to be effected as well as an automatic adjustment by digital pulses from either a local or a remote

- 2 -

digital computer.

It is therefore an object of the present invention to provide an improved thermostat having joint manual and digital setpoint adjustment capability.

This object is achieved by the characterizing features of claim 1. Further advantageous embodiments of the inventive thermostat may be taken from the sub-claims. In accordance with the present invention there has been provided a thermostat having a setpoint adjustment device, a stepping motor means for driving the adjustment device and including a stepping motor having a motor shaft connected at one end to a drive means and a manual control knob means for driving the adjustment device independently of the motor means and being connected between the drive means on the motor shaft and the adjustment device.

A better understanding of the present invention may be had when the following detailed description is read in connection with the accompanying drawings, in which:

Figure 1 is a pictorial illustration of a thermostat embodying an example of the present invention and

Figure 2 is a circuit diagram of an example of a circuit suitable for use in the thermostat shown in Fig. 1.

Referring to Fig. 1 in more detail, there is shown a thermostat 1 embodying an example of the present invention and having a thermostat base 2. A display device 4, e.g., a liquid crystal display, is mounted on the thermostat base 2 as well as time and temperature programming push buttons 6 and 8. The display 4 can be used to display selectively the time-of-day as well as the time of a setback operation and the setback temperature. For example, the display 4 could display the time-of-day until one of the programming buttons 6,8 is actuated at which time the display 4 would display information controlled by the actuated pushbutton. The base 2 is also arranged to support a separate sub-base 10 on which is mounted a bidirectional stepping motor 12. A manual thermostat adjustment knob 14 with a toothed periphery 16 is arranged to mesh with a gear wheel 18 mounted on an adjacent end of the motor shaft 20 extending from the stepping motor 12. A bimetallic temperature control element 22 is mounted on the sub-base 10 and mechanically coupled to the adjustment knob 14 to provide a temperature sensitive control in a conventional manner in combination with a mercury switch 24. The control element 22 is arranged to be operated by the manual control knob 14 to change the operating setpoint of the thermostat 1 in a manner well-known in the art. When the manual adjustment of the thermostat 1 is effected through the control knob 14, the non-energized detent torque of the stepping motor 12 provides a mechanical feedback for holding the setpoint to where it is adjusted by the manual operation as well as signaling adjustment increments to an operator. When a digital or non-manual readjustment of the setpoint, as in the case of an automatic setback operation, is to take place, a predetermined number of pulses are applied to the motor 12 corresponding to the amount and direction of the temperature change desired. By the motor control operation performed by the pulses, the stepping motor 12 is arranged to turn the thermostat knob 14 through the gear 18 to move the setpoint between the normal temperature control point and a new control point, e.g., the setback temperature point. A reverse operation of the stepping motor 12 would be effected at the end of the setback period to restore the original temperature setpoint by driving the control knob 14 back to its original position prior to the setback operation.

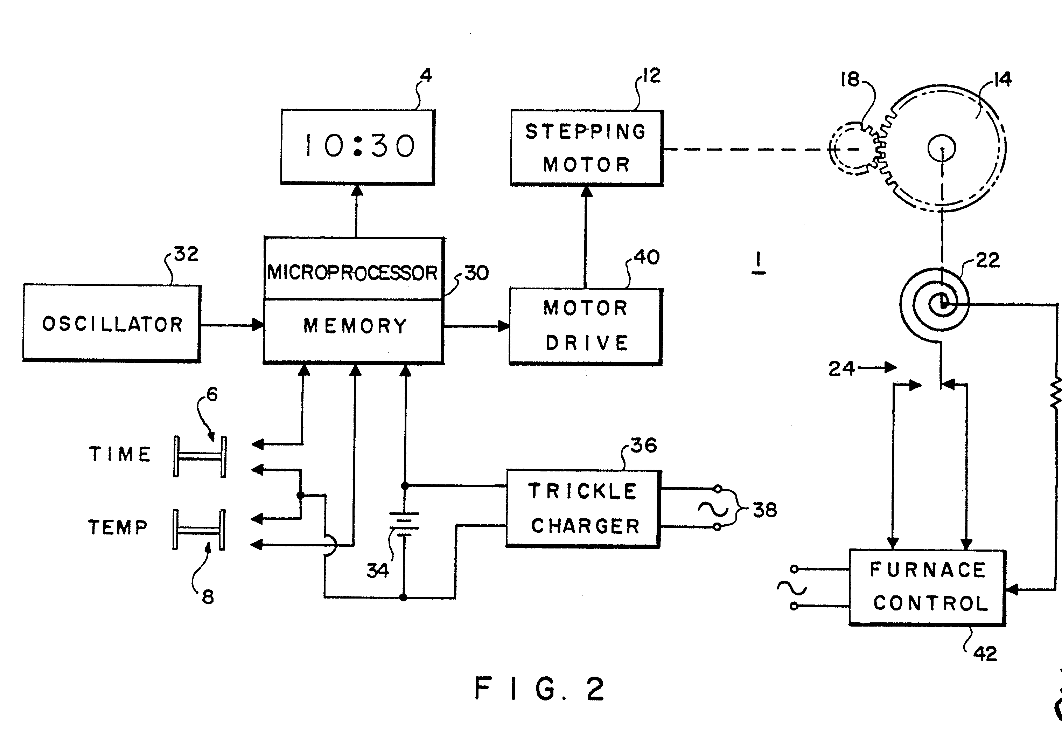

Referring to Fig. 2 in more detail, there is shown an example of a circuit for providing the stepping motor control of the thermostat 1 shown in Fig. 1. Similar reference numbers have been used in Fig. 2 to indicate the elements also shown in Fig. 1. A digital microprocessor and memory apparatus 30 provides a means for storing the information for controlling the setback setpoint change operation of the thermostat 1 in accordance with a predetermined stored time and temperature format. The apparatus 30 may be any suitable device and may include a microprocessor, analog-to-digital converters, digital-to-analog converters, a random access memory element, etc., such devices being well-known in the
art.  A fixed frequency oscillator 32 provides a clock signal
to the memory 30.  A battery 34 is used to provide a local
independent source of power for the various electronic
components and the stepping motor 12 used in the thermostat
1.  Additionally, local programming of the microprocessor and
memory apparatus 30 is achieved via the momentary contact
switches 6 and 8 which provide data pulses from the battery 34
to the microprocessor and memory apparatus 30.  The apparatus
30 may also be provided with an additional digital input line
(not shown) to enable digital signals from a remote digital
computer to also affect the time and temperature format stored
in the memory portion of the microprocessor and memory
apparatus 30.  A trickle charger 36 may be used to maintain a
charged state of the battery 34 from an alternating current
source connected to the charger input terminals 38.  However,
the use of low power integrated circuitry and a low power
stepping motor would allow a long term operation of the
thermostat 1 without the need for the charger 36.

The control output signal from the microprocessor and
memory apparatus 30 is a series of pulses which are applied to
a stepping motor drive 40.  The drive 40 is arranged to drive
the stepping motor 12 to turn the gear 18 and, concomitently,
the thermostat knob 14.  The thermostat adjustment knob 14 is
connected, as previously discussed, to the bimetallic element

- 6 -

22 which affects the mercury switch 24. The output of the switch 24 is applied to a furnace control 42 for controlling a furnace affecting the environment of the thermostat 1. It should be noted that the present invention is also applicable to a system for cooling in which case the final control element would be either an air conditioning control or a control for a heat pump. Thus, the motor drive 40 is automatically energized by the output of the microprocessor and memory apparatus 30 in accordance with the stored format, which can be altered as previously discussed, e.g., by the time and temperature programming switches 6, 8, to adjust the control knob 14. For example, a night setback operation is effected at the time and temperature stored in the memory 30 and is terminated at the time stored in the memory 30. Conversely, the control knob 14 may be manually adjusted with the stepping motor 12 providing the detent action for retaining the setpoint position of the control knob 14. Further, the low torque requirements of the setpoint control knob 14 allow the stepping motor 12 to be directly coupled with a relatively low gear reduction whereby the manual adjustments are not impeded. Accordingly, it may be seen that there has been provided, in accordance with the present invention, an improved thermostat having a combined analog and digital adjustment capability.

Claims:

1. A thermostat, c h a r a c t e r i z e d   b y a setpoint adjustment device (22,24), stepping motor means (12,18,20,30,32,34,40) for driving said adjustment device and including a stepping motor (12) having a motor shaft (20) connected at one end to a drive means (18), and manual control knob means (14,16) for driving said adjustment device (22,24) independently of said motor means (12) and being connected between said drive means (18) on said motor shaft (20) and said adjustment device (22,24).

2. A thermostat according to claim 1, c h a r a c - t e r i z e d   i n   t h a t   said manual control knob means includes a first drive gear (16) and said drive means includes a second gear (18) arranged to mesh with said first gear.

3. A thermostat according to claim 2, c h a r a c - t e r i z e d   i n   t h a t   said control knob means includes a control knob (14) and said first drive gear (16) is arranged as a toothed periphery of said control knob.

4. A thermostat according to claim 1, c h a r a c - t e r i z e d i n t h a t said motor means includes microprocessor and memory means (30,32) for storing time and temperature data defining a desired adjustment format of said adjustment device.

5. A thermostat according to claim 4, c h a r a c - t e r i z e d i n t h a t said microprocessor and memory means includes momentary contact switch means (6,8) for entering the adjustment format in the microprocessor and memory means (30,32).

6. A thermostat according to claim 4, c h a r a c - t e r i z e d i n t h a t said motor means includes battery means (34) for supplying local power to said motor and said microprocessor and memory means.

7. A thermostat according to claim 4, c h a r a c - t e r i z e d i n t h a t said microprocessor and memory means (30,32) includes a fixed frequency oscillator means (32) for supplying a clock signal to said microprocessor and memory means.

8. A thermostat according to claim 1, c h a r a c - t e r i z e d i n t h a t said adjustment device includes a bimetallic element (22) and a switch means (24) arranged to be actuated by said element by a temperature induced motion of said element, said element being connected to said control knob means (14) to provide an adjustment of the temperature needed to produce said actuation of said switch means.

9. A thermostat according to claim 1, c h a r a c - t e r i z e d   b y   mounting means (2) for mounting said adjustment device (22,24), said motor means (12, 18) and said control knob means (14) in a fixed spatial relationship therebetween.

F I G. I

F I G. 2

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | US-A-4 041 325 (ANGOTT) <br> * column 1, line 66 - column 2, line 34; column 8, line 56 - column 10, line 53; column 14, lines 11-39; claim 1; figures 1, 5, 6, 7, 11 * | 1 | G 05 D 23/275 <br> G 05 D 3/18 |
| A | | 2,3,6, 8,9 | |
| Y | US-A-4 356 439 (MOTT et al.) <br> * column 1, line 5 - column 2, line 26; column 4, line 32 - column 5, line 14; figures 1, 2 * | 1 | |
| A | US-A-4 248 375 (WHITNEY) <br> * column 1, lines 37-63; column 3, line 12 - column 4, line 2; column 4, line 50 - column 5, line 14; figures 1, 2, 5 * | 4-7 | |

TECHNICAL FIELDS SEARCHED (Int. Cl 4)

G 05 D 23/00
C 05 D 3/00
H 01 H 37/00
H 01 H 43/00
H 02 P 8/00

The present search report has been drawn up for all claims

| Place of search | Date of completion of the search | Examiner |
|---|---|---|
| BERLIN | 29-08-1986 | BEITNER M.J.J.B. |